# EUROPEAN PATENT SPECIFICATION

(11) **EP 0 490 138 B1**
(45) Date of publication and mention of the grant of the patent: **29.01.1997**
(21) Application number: 91119869.5
(22) Date of filing: 21.11.1991
(51) Int. Cl.: G11B 15/087, G11B 15/02

(54) **Apparatus for dubbing a recorded video tape in synchronism with the playing of the video tape**
Anordnung zum Kopieren eines aufgezeichneten Videosignals synchron mit dem Wiedergabe des Videosignals
Appareil pour copier un enregistrement se trouvant sur une bande vidéo en synchronisme avec la lecture de la bande vidéo

(30) Priority: 11.12.1990 KR 2033790
(43) Date of publication of application: 17.06.1992
(73) Proprietor: SAMSUNG ELECTRONICS CO., LTD., Suwon-City, Kyounggi-Do 441-370 (KR)
(72) Inventor: Hong, Kwong-Pyo, Suwon-city, Kyounggi-do (KR)
(74) Representative: Grünecker, Kinkeldey, Stockmair & Schwanhäusser Anwaltssozietät

(56) References cited:
- WO-A-90/12396
- PATENT ABSTRACTS OF JAPAN vol. 10, no. 254 (P-492) 30 August 1986 & JP-A-61 080 582

## Description

The present invention relates to a video tape recorder, and more particularly to a method for copying a program recorded in a video tape by using two video tape recorders.

Generally, a double deck audio cassette tape recorder has a record/playback deck together with an exclusive playback deck. In this case, a recorded cassette tape is loaded in the exclusive playback deck and the pause and playback buttons are pressed, whereas an empty cassette tape is loaded in the record/playback deck and the record button is pressed. Then the record/playback deck is operated in a record mode, while the exclusive playback deck is changed from a pause mode to a playback mode, so that the dubbing operation is performed.

However, a video tape recorder occupies too large volume to be provided with two decks. Accordingly a recorded video tape is dubbed by using two video tape recorders, thus making it complicated to perform a precise dubbing. For example, one video tape recorder is operated in the playback mode, and the other in the record mode by using both hands of a user. In this case, if the playback mode of the one video tape recorder starts prior to the record mode of the other video tape recorder, the beginning of the recorded video tape is partially not dubbed.

JP-A-61080582 discloses an apparatus for dubbing a recorded video tape under the control of a remote controller. Two video tape recorders are connected together to provide only the video and sound signals from one recorder to the other. One of the video tape recorders then acts as a playback means and the other is a recording means. The playback means performs a tape loading operation, a pause operation and a playback operation under the control of signals produced by the remote controller. At the same time the recording is controlled by the remote controller to perform a tape loading operation, a pause operation and a recording operation.

The apparatus of document D1 has a disadvantage that the dubbing operation is controlled entirely by the remote controller with no feedback to the remote controller or communication between the two video tape recorders. Consequently, the dubbing operation may be started unsuccessfully if any of the signals from the remote controller do not reach the video tape recorders or if either of the video tape recorders are not ready for operation.

It is the object of the invention to provide an apparatus and method for subbing a video tape in a more reliable manner and with greater ease of operation.

This object is solved by the subject matter of claims 1 and 3.

Preferred embodiments are the subject matter of claims dependent on claims 1 and 3.

The present invention will now be described more specifically with reference to the drawings attached only by way of example.

### BRIEF DESCRIPTION OF THE ATTACHED DRAWINGS

For a better understanding of the invention and to show how the same may be carried into effect, reference will now be made, by way of example, to the accompanying diagrammatic drawings, in which:
FIG. 1 is a block diagram for illustrating the inventive apparatus;
FIG. 2 is a block diagram for illustrating two inventive apparatuses of FIG. 1 being connected to perform the simultaneous dubbing;
FIG. 3 is a block diagram for illustrating in more detail the structure of the inventive apparatus of Fig. 1;
FIG. 4 is a block diagram for illustrating two inventive apparatuses of Fig. 3 being connected to perform the simultaneous dubbing; and
FIG. 5 is a flow chart for illustrating the steps of the inventive method for performing the simultaneous dubbing.

### DETAILED DESCRIPTION OF CERTAIN PREFERRED EMBODIMENTS

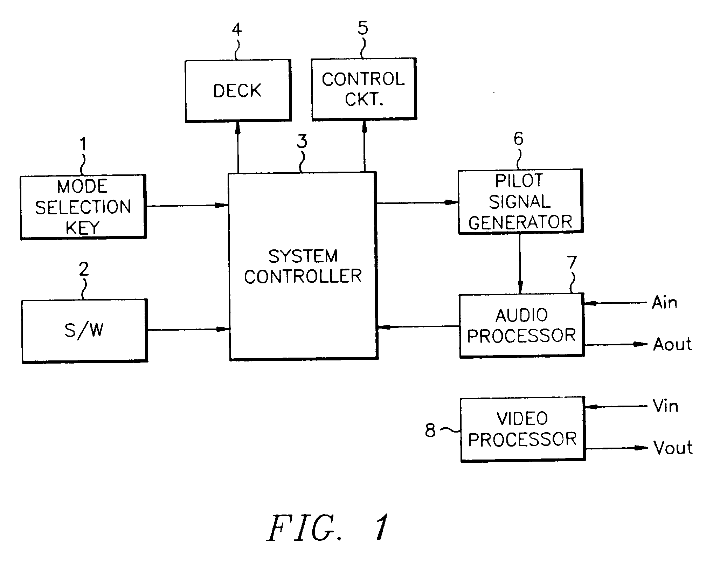

Referring to FIG. 1, a mode selection key means 1 is to generate the signals for operating a video tape recorder in the playback and record modes. The system controller 3 controls a deck mechanism 4 and control circuit 5 in response to the signals generated by the mode selection key means 1 and a synchronous record switch 2.

If the record switch (not shown) of the mode selection key means 1 is turned on together with the synchronous record switch 2, the system controller 3 causes an empty video tape to be loaded into the deck, and then the deck to be in the pause mode. Thereafter the system controller 3 provides a control signal to a pilot signal generating means 6 to generate a pilot signal of a given frequency applied through an audio processing means 7 to the audio line output terminal (Aₒᵤₜ), which pilot signal is in turn applied to the audio line input terminal of another video tape recorder.

Thereafter, the pilot signal is fed back from the another video tape recorder to the audio line input terminal (Aᵢₙ), and detected by the audio processing means 7 to transmit it to the system controller 3. Then the system controller 3 changes the operational mode of the deck 4 from the pause mode to the record mode. Thus the normal record function is performed. Meanwhile, the video processing means 8 processes the video signal of the another video tape recorder supplied with through the video line input terminal (Vᵢₙ). The processed video signal is transmitted to the record head to record it in an empty video tape (not shown).

Alternatively with assuming the apparatus of FIG. 1 is a video tape recorder for playing back a recorded video tape, if the playback switch of the mode selection key means 1 is turned on together with the synchronous record switch 2, the system controller 3 controls the control circuit 5 so as to cause the recorded video tape to be loaded in the deck 4, and then the deck to be in the still mode. Thereafter, if a pilot signal is inputted through the audio line input terminal (Aᵢₙ), the system controller 3 changes the operational mode of the deck from the still mode to the playback mode. Meanwhile, the video processing means 8 processes the video tape signals read by the playback head (not shown). The processed video tape signals are transmitted through the video line output terminals (Vₒᵤₜ) to another video tape recorder in the record mode.

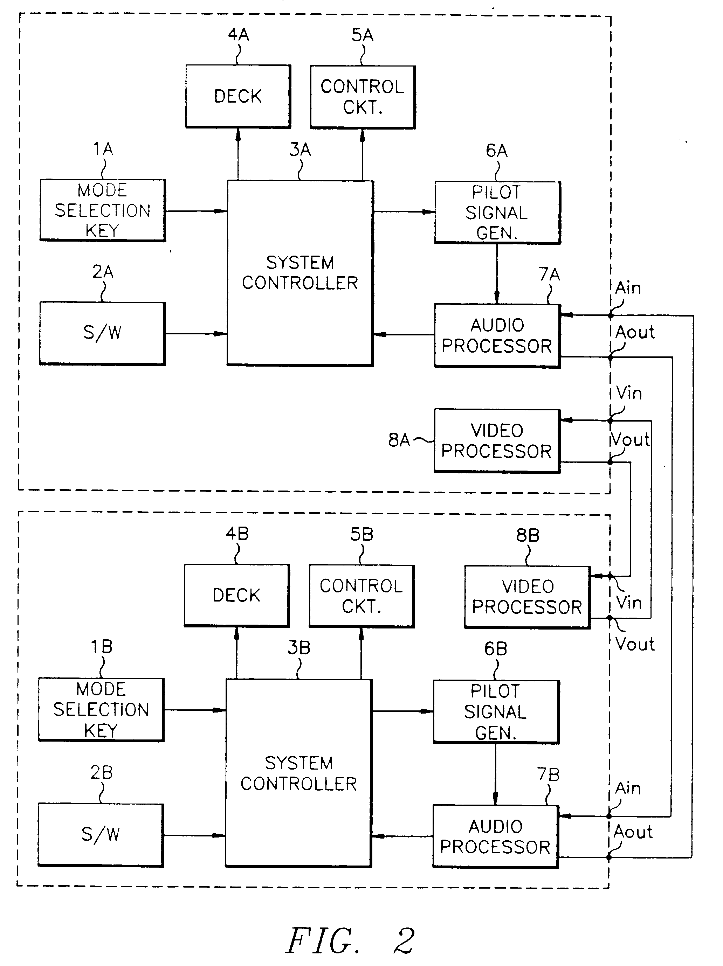

Referring to FIG. 2, it is assumed the upper dotted rectangle is a first video tape recorder operated in the playback mode, and the lower dotted rectangle a second video tape recorder operated in the record mode.

The audio line input and output terminals (Aᵢₙ and Aₒᵤₜ) of the first video tape recorder are connected respectively to the audio line output and input terminals (Aₒᵤₜ and Aᵢₙ) of the second video tape recorder. Also the video line output terminal (Vₒᵤₜ) of the first video tape recorder is connected to the video line input terminal (Vᵢₙ) of the second video tape recorder.

In operation, if the synchronous record switches 2A and 2B of the first and second video tape recorders are turned on, the system controller 3A and 3B recognize the synchronous record mode being presently performed. Then if the playback key of the mode selection key means 1A is pressed, the system controller 3A controls the control circuit 5A so as to load a recorded video tape (not shown) to play back in the deck 4A, and then to stop the rotation of the capstan (not shown) of the first video tape recorder. Thus the system controller 3A causes the first video tape recorder to be in the still mode until receiving from the audio signal processing means 7A a pilot signal generated by the second video tape recorder as described hereinafter.

Meanwhile, if the record key of the mode selection key means 1B of the second video tape recorder is pressed, the system controller 3B controls the control circuit 5B so as to load an empty video tape (not shown) in the deck 4B, and then to stop the rotation of the capstan (not shown) of the second video tape recorder, thus letting the deck 4B in the pause mode. In addition, the system controller 3B provides a control signal to the pilot signal generating means 6B to generate a pilot signal applied through the audio processing means 7B to the audio line output terminal (Aₒᵤₜ) to the audio line input terminal (Aᵢₙ) of the first video tape recorder.

The inputted pilot signal is applied through the audio processing means 7A to the system controller 3A to change the operational mode of the first video tape recorder from the still mode to the playback mode.

Then the system controller 3A of the first video tape recorder provides a control signal to the pilot signal generating means 6A to generate a pilot signal applied to the audio processing means 7A. The audio processing means 7A mixes the pilot signal with the audio signals of the recorded video tape generated from the audio head. The mixed signals are applied through the audio output terminal (Aₒᵤₜ) of the first video tape recorder to the audio input terminal (Aᵢₙ) of the second video tape recorder to the audio processing means 7B. The audio processing means 7B detects the pilot signal applied to the system controller 3B of the second video tape recorder. Then the system controller 3B controls the control circuit 5B so as to change the operational mode of the deck 4B from the pause mode into the record mode.

Thus the second video tape recorder performs the recording function simultaneously with the playing back of the first video tape recorder from the very beginning of the playing back.

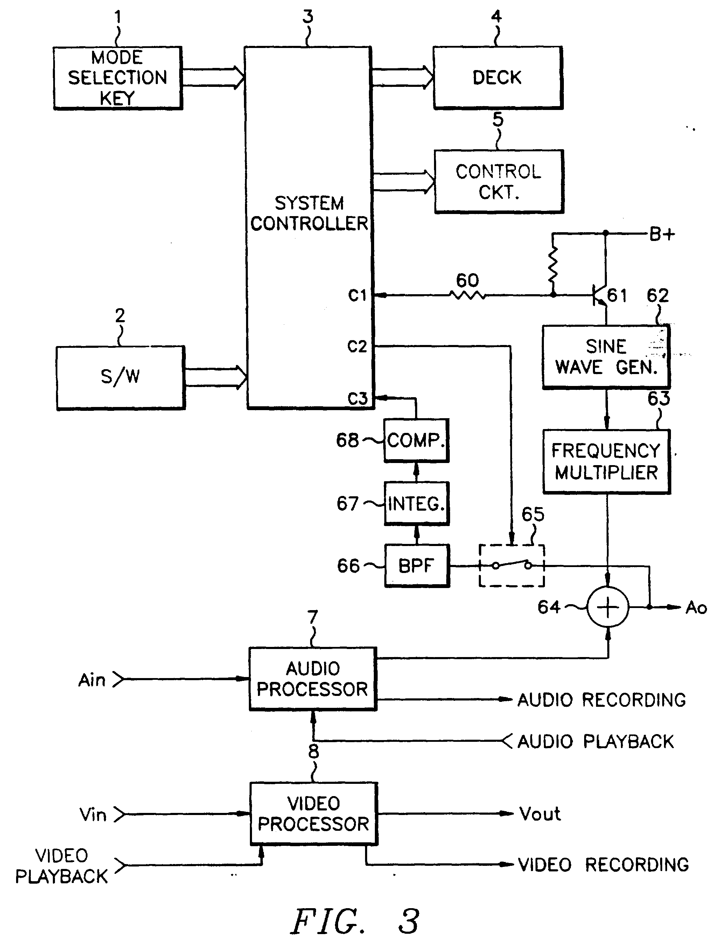

Now reference is made to FIG. 3 for detailedly illustrating the apparatus of FIG. 1.

With assuming this apparatus is in the record mode, the system controller 3 generates a control signal of high state applied through the first control terminal C1 to a resistor 60 to the base of a transistor 61. Then the transistor 61 is turned on so as to enable a sine wave signal generator 62 by a voltage B⁺.

The sine wave signal generator 62 provides a signal of a suitable oscillation frequency (e.g., 1KHz - 3KHz) to a frequency multiplier 63. The output signal of the frequency multiplier 63 is applied to a mixer 64. In this case, it is desired that the frequency-multiplied signal have an inaudible frequency not so as to interfere with the audio signal generated from the audio processing means 7, thus preventing the multiplied frequency being recorded on the video tape by the audio head. The frequency-multiplied signal is transmitted through the mixer 64 to the audio line output terminal (Aₒᵤₜ) to the audio line input terminal of another video tape recorder.

Meanwhile, if another frequency-multiplied signal of an external source is inputted through the audio line input terminal (Aᵢₙ), the audio processing means 7 provides the played back audio signal together with the frequency-multiplied signal (pilot signal) through the mixer 64 to the audio line output terminal to a monitor. In addition, the output of the mixer 64 is transmitted through an analog switch 65 controlled by the second control signal C2 of the system controller 3 to a band pass filter 66. The second control signal C2 of the system controller 3 is to detect the pilot signal after the completion of the tape loading.

The band pass filter 66 detects the pilot signal from the mixed signal of the audio signal and pilot signal received through the analog switch 65, which pilot signal is applied to an integrating circuit 67. The integrating circuit 67 integrates the pilot signal into a direct current signal applied to a comparator 68, which compares the integrated direct current signal with a given reference signal so as to detect the pilot signal. If there is detected the pilot signal, the comparator 68 generates a signal of high state that is supplied to the system controller 3 as a control signal C3. Then the system controller 3 changes the operational mode of the deck from the pause mode to the record mode.

Alternatively, if the video tape recorder of FIG. 3 is to serve the playback mode, the system controller 3, after performing the still mode, turns on the analog switch 65 so as to receive the pilot signal from the audio line input terminal (Aᵢₙ) through the audio processing means 7 and the mixer 64. Then, the band pass filter 66 detects the pilot signal applied to the integrating circuit 67, which integrates the pilot signal into a direct current signal applied to the comparator 68. As a result, the comparator 68 provides a signal of high state to the system controller 3. Thus the system controller 3 changes the operational mode of the deck from the still mode to the normal playback mode. Meanwhile, the video processing means 8 processes the recorded signal of the video tape retrieved by the video playback head. The processed signal is supplied through the video line output terminal (Vₒᵤₜ) to the other video tape recorder serving the record mode, while the audio signal retrieved by the audio playback head is supplied through the audio line output terminal (Aₒᵤₜ) to the other video tape recorder. Thus the simultaneous dubbing is performed.

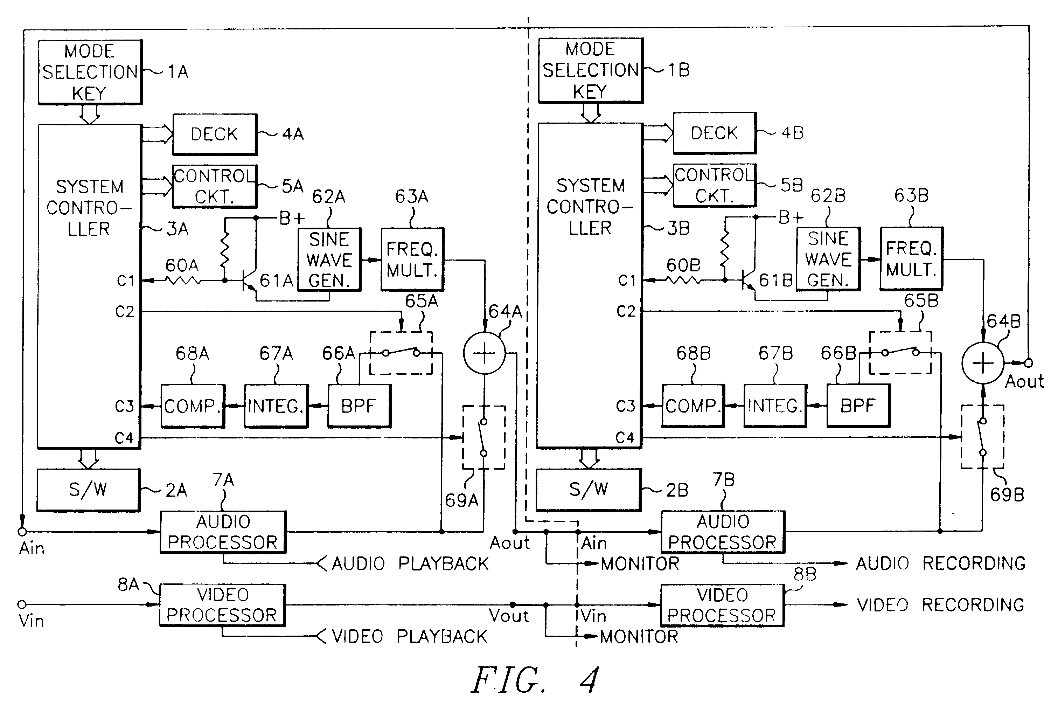

Referring to FIG. 4 for more specifically illustrating two apparatuses of FIG. 3 connected similar to FIG. 2, it is assumed that the left part of the dotted lines is a first video tape recorder for serving the playback mode, and the right part is a second video tape recorder for serving the record mode.

Of course, the audio and video line input/output terminals of the video tape recorder are connected as shown in FIG. 2.

In operation, the synchronous record switches 2A and 2B of the first and second video tape recorders are pressed, the system controller 3A and 3B recognizes the simultaneous dubbing mode.

Then the playback key of the first video tape recorder is pressed so as to cause the system controller 3A to control the control circuit 5A to load a recorded video tape into the deck 4A, and thereafter to stop the rotation of the capstan so as to cause the first video tape recorder to be in the still mode.

Meanwhile, the record key of the mode selection key means 1B of the second video tape recorder is pressed so as to cause the system controller 3B to control the control circuit 5B to load an empty video tape into the deck 4B, and thereafter to let the second video tape recorder be in the pause mode. The system controller 3B also turns on the transistor 61B through the resistor 60B. Then the sine wave signal generator 62 applies a given sine wave signal to the frequency multiplier 63B. The frequency-multiplied signal is applied through the mixer 64B to the audio line output terminal to the audio line input terminal (Aᵢₙ) of the first video tape recorder, and to the audio processing means 7A.

The audio processing means 7A applies the frequency-multiplied signal, i.e., the pilot signal received from the second video tape recorder to the mixer 64A. The output signal of the mixer 64A is detected by the band pass filter 66A applied to the integrating circuit 67A, since the analog switch 65A is turned on the system controller 3A after the completion of the tape loading of the first video tape recorder. The integrating circuit 67A integrates the detected signal into a direct current signal applied to the comparator 68A, which in turn applies the pilot signal to the system controller 3A. Thus, the system controller 3A recognizes the control signal C3 of high state so as to cause the control circuit 5A to change the operational mode the deck 4A from the still mode to the playback mode.

Consequently, the audio signal and the pilot signal retrieved by the audio playback head is processed by the audio processing means 7A applied through the audio line output terminal (Aₒᵤₜ) to the audio line input terminal (Aᵢₙ) of the second video tape recorder to the audio processing means 7B of the second video tape recorder.

The audio and pilot signals of the audio processing means 7B are applied through the mixer 64B to the analog switch 65B to the band pass filter 66B, which detects only the pilot signal applied to the integrating circuit 67B. Then the integrating circuit 67B integrates the pilot signal applied to the comparator 68B, which in turn provides a signal of high state to the system controller 3B. Then the system controller 3B changes the operational mode of the deck of the second video tape recorder to the record mode. Thus the recording function of the second video tape recorder is performed from the very beginning of the playback function of the first video tape recorder. Of course, the audio and video playback signals of the first video tape recorder are retrieved by the audio and video playback head applied to the monitor, and recorded in the empty video tape by the audio and video record head of the second video tape recorder.

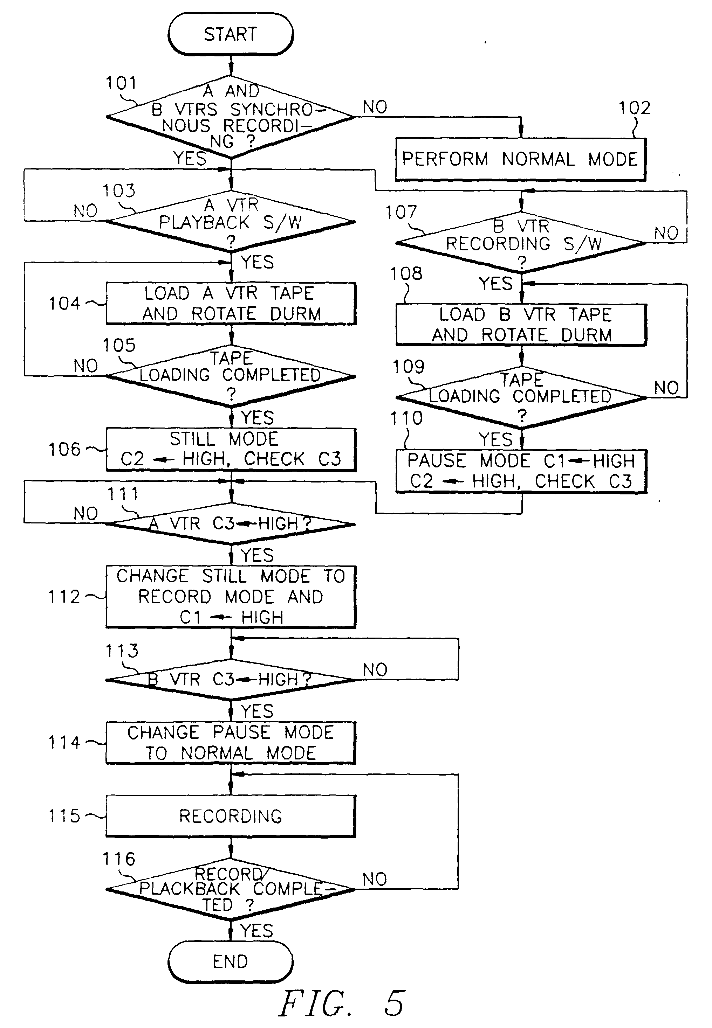

Referring to FIG. 5 for illustrating the flow chart of performing the simultaneous dubbing according to the present invention, the system controller 3A and 3B determine whether the synchronous keys 2A and 2B of the first and second video tape recorders are pressed in step 101. If All the synchronous keys 2A and 2B are not pressed, the program proceeds to the step 102 for each performing independent function.

However, if all the synchronous record keys 2A and 2B are pressed, the program proceeds to step 103 with the playback key of the first video tape recorder being pressed earlier than the record key of the second video tape recorder.

Then the system controller 3A loads the recorded video tape into the deck in step 104, and lets the first video tape recorder be in the still mode after the completion of the loading. Further, the system controller 3A turns on the analog switch by the control signal C2 of high state, and checks the control signal C3 in step 106.

Meanwhile, if the record switch of the second video tape recorder is pressed, the program proceeds from step 107 to step 108, so that the system controller 3B of the second video tape recorder loads an empty video tape, and checks whether the loading is completed in step 109. If the loading is completed, the system controller 3B lets the second video tape recorder be in the pause mode, and generates the pilot signal by making the control signal C1 high. The pilot signal is supplied to the first video tape recorder. The system controller 3B also makes the control signal C2 high in order to turn on the analog switch 65B, and checks the state of the control signal C3.

If the pilot signal generated from the second video tape recorder is applied to the first video tape recorder, the system controller 3A determines whether the control signal C3 is high, in step 111. If the control signal C3 is high to indicate the existence of the pilot signal, the system controller 3A changes the operational mode of the first video tape recorder from the still mode to the record mode, while making the control signal C1 high so as to generate the pilot signal applied to the second video tape recorder, in step 112.

In this case, the system controller 3B determines whether the control signal C3 is high, thus checking the existence of the pilot signal. If the control signal C3 is high in step 113, the program proceeds to step 114, so that the system controller 3B changes the operational mode of the second video tape recorder from the pause mode to the normal record mode in step 115. Finally, the record/playback function of the first and second video tape recorders is completed in step 116.

As stated above, the present invention employs a pilot signal in order to dub a recorded video tape from the very beginning of the playing back thereof by using two video tape recorders.

## Claims

1. Video tape recorder comprising a mode selection key means (1) for generating a plurality of key signals so as to perform various functions including record and playback functions, a deck means (4) for playing back or recording a video tape in response to said key signals, and dubbing means for dubbing a recorded video tape simultaneously with the playing back of the video tape from the very beginning of said playing back, said dubbing means comprising:
a synchronous record switch means (2) for generating a synchronous record signal;
a control means (3) for generating a first and second control signal, said first control signal driving said deck means (4) in a record mode so as to load an empty video tape and thereafter to pause said video tape recorder when a record key signal is inputted together with said synchronous record signal, said second signal driving said deck means in a playback mode so as to load a recorded video tape and thereafter to bring said video tape recorder into a still mode when a playback key signal is inputted together with said synchronous record signal;
**characterized by further comprising,**
a pilot signal generating means (6) for generating a first pilot signal of a given frequency in response to said first control and for providing said first pilot signal to an output of said video tape recorder;
a pilot signal detection means (66) for detecting a second pilot signal from a mixed signal received via an input of the video tape recorder; and
an integrating circuit (67) for integrating said second pilot signal;
a comparator (68) for comparing the integrated signal of said integrating circuit with a reference signal so as to detect said pilot signal in order to change said video tape recorder from said pause into said record mode;
a further pilot signal generating means (6) for generating a second pilot signal of a given frequency in response to receipt of a first pilot signal at an input of the video tape recorder;
a signal mixer (64) for mixing the second pilot signal and an audio signal generated during a playback mode of the video tape recorder and providing the mixed signal to an output of the video tape recorder.

2. Video tape recorder according to claim 1, wherein said pilot signals consist of an inaudible frequency transmitted to the audio line input/output terminal of said video tape recorder.

3. Method for dubbing a recorded video tape simultaneously with the playing back of said video tape by using a first and second video tape recorder each having a mode selection key means for generating a plurality of key signals so as to perform various functions including record and playback functions, and a deck means for playing back and recording a video tape in response to said key signal, said method comprising the steps of:
loading a recorded video tape in said first video tape recorder and afterwards bringing the first video tape recorder in a still mode when said first video tape recorder receives a playback key input signal together with a synchronous record signal;
loading an empty video tape in said second video tape recorder and afterwards bring the second video tape recorder in a pause mode when said second video tape recorder receives a record key input signal together with a synchronous record signal;
**characterized by further comprising the steps of,**
generating in said second video tape recorder a first pilot signal of a given frequency for indication that said second video tape recorder is prepared to perform the recording function and providing said first pilot signal to said first video tape recorder;
changing in said first video tape recorder in response to receipt of said first pilot signal said still mode in to playback mode ;
generating in said first video tape recorder a second pilot signal and mixing it with the audio signal produced during the playback mode and providing the mixed signal to said first video tape recorder; and
changing in said second video tape recorder in response to receipt of said second pilot signal the pause mode in to a record mode, thereby synchronizing the start of a playback function of the first video tape recorder with the start of the record function of said second video tape recorder.

4. Method for dubbing a recorded video tape simultaneously with the playing back of said video tape as claimed in claim 3, wherein said pilot signals have an inaudible frequency.

5. Method for dubbing a recorded video tape simultaneously with the playing back of said video tape as claimed in claim 3 or 4, wherein said pilot signals are transmitted through the audio line input/output terminals of said first and second video tape recorders.

## Patentansprüche

1. Videorecorder, der eine Funktionswahltasteneinrichtung (1) zum Erzeugen einer Vielzahl von Tastensignalen zum Ausführen verschiedener Funktionen einschließlich Aufnahme-und-Abspielfunktionen, eine Laufwerkeinrichtung (4) zum Abspielen oder Bespielen eines Videobandes in Reaktion auf die Tastensignale sowie eine Kopiereinrichtung zum Kopieren eines bespielten Videobandes simultan zum Abspielen des Videobandes vom Beginn des Abspielens an umfaßt, wobei die Kopiereinrichtung umfaßt:
eine Synchronaufnahme-Schaltereinrichtung (2), die ein Synchronaufnahmesignal erzeugt;
eine Steuereinrichtung (3), die ein erstes und ein zweites Steuersignal erzeugt, wobei das erste Steuersignal die Laufwerkeinrichtung (4) in einem Aufnahmebetrieb so steuert, daß ein unbespieltes Videoband eingelegt wird, und sich der Videorecorder anschließend in einem Pausenzustand befindet, wenn ein Aufnahmetastensignal zusammen mit dem Synchronaufnahmesignal eingegeben wird, wobei das zweite Signal die Laufwerkeinrichtung in einem Abspielzustand so steuert, daß ein bespieltes Videoband eingelegt und der Videorecorder anschließend in einen Standbetrieb versetzt wird, wenn ein Abspieltastensignal zusammen mit dem Synchronaufnahmesignal eingegeben wird;
**dadurch gekennzeichnet,** daß er des weiteren umfaßt:
eine Leitsignalerzeugungseinrichtung (6), die in Reaktion auf das erste Steuersignal ein erstes Leitsignal einer vorgegebenen Frequenz erzeugt und das erste Leitsignal zu einem Ausgang des Videorecorders leitet;
eine Leitsignalerfassungseinrichtung (66), die ein zweites Leitsignal aus einem gemischten Signal erfaßt, das über einen Eingang des Videorecorders empfangen wird; und
eine Integrierschaltung (67), die das zweite Leitsignal integriert;
einen Komparator (68), der das integrierte Signal der Integrierschaltung mit einem Bezugssignal vergleicht, um so das Leitsignal zu erfassen und den Videorecorder aus dem Pausenbetrieb in den Aufnahmebetrieb zu versetzen;
eine weitere Leitsignalerzeugungseinrichtung (6), die in Reaktion auf den Empfang eines ersten Leitsignals an einem Eingang des Videorecorders ein zweites Leitsignal einer vorgegebenen Frequenz erzeugt;
einen Signalmischer (64), der das zweite Leitsignal und ein Tonsignal mischt, das bei einem Abspielbetrieb des Videorecorders erzeugt wird, und das gemischte Signal einem Ausgang des Videorecorders zuführt.

2. Videorecorder nach Anspruch 1, wobei die Leitsignale aus einer nicht hörbaren Frequenz bestehen, die dem Tonleitungs-Eingangs-/Ausgangsanschluß des Videorecorders zugeleitet wird.

3. Verfahren zum Kopieren eines bespielten Videobandes gleichzeitig mit dem Abspielen des Videobandes unter Verwendung eines ersten und eines zweiten Videorecorders, die jeweils eine Funktionswahltasteneinrichtung zum Erzeugen einer Vielzahl von Tastensignalen zum Ausführen verschiedener Funktionen einschließlich Aufnahmeund Abspielfunktionen sowie eine Laufwerkeinrichtung zum Abspielen und Bespielen eines Videobandes in Reaktion auf das Tastensignal aufweisen, wobei das Verfahren die folgenden Schritte umfaßt:
Einlegen eines bespielten Videobandes in den ersten Videorecorder und anschließendes Versetzen des ersten Videorecorders in einen Standbetrieb, wenn der erste Videorecorder ein Abspieltasten-Eingangssignal zusammen mit einem Synchronaufnahmesignal empfängt;
Einlegen eines unbespielten Videobandes in den zweiten Videorecorder und anschließendes Versetzen des zweiten Videorecorders in einen Pausenbetrieb, wenn der zweite Videorecorder ein Aufnahmetasten-Eingangssignal zusammen mit einem Synchronaufnahmesignal empfängt;
**dadurch gekennzeichnet,** daß es des weiteren die folgenden Schritte umfaßt:
Erzeugen eines ersten Leitsignals einer vorgegebenen Frequenz in dem zweiten Videorecorder, um anzuzeigen, daß der zweite Videorecorder bereit ist, den Aufnahmevorgang auszuführen, und Leiten des ersten Leitsignals zu dem ersten Videorecorder;
Versetzen des ersten Videorecorders aus dem Standbetrieb in den Abspielbetrieb in Reaktion auf den Empfang des ersten Leitsignals;
Erzeugen eines zweiten Leitsignals in dem ersten Videorecorder und Mischen desselben mit dem Tonsignal, das beim Abspielbetrieb erzeugt wird, und Leiten des gemischten Signals zu dem ersten Videorecorder; und
Versetzen des zweiten Videorecorders aus dem Pausenbetrieb in einen Aufnahmebetrieb in Reaktion auf den Empfang des zweiten Leitsignals, so daß der Beginn einer Abspielfunktion des ersten Videorecorders mit dem Beginn der Aufnahmefunktion des zweiten Videorecorders synchronisiert wird.

4. Verfahren zum Kopieren eines bespielten Videobandes gleichzeitig mit dem Abspielen des Videobandes nach Anspruch 3, wobei die Leitsignale eine nicht hörbare Frequenz aufweisen.

5. Verfahren zum Kopieren eines bespielten Videobandes gleichzeitig mit dem Abspielen des Videobandes nach Anspruch 3 oder 4, wobei die Leitsignale über die Tonleitungs-Eingangs-/Ausgangsanschlüsse des ersten und des zweiten Videorecorders übertragen werden.

## Revendications

1. Magnétoscope comprenant des moyens (1) d'entrée pour sélection de mode destinés à générer une pluralité de signaux d'entrée afin de réaliser diverses fonctions comprenant les fonctions d'enregistrement et de lecture, des moyens de platine (4) destinés à lire ou enregistrer une bande vidéo en fonction desdits signaux d'entrée, et des moyens de copiage destinés à copier une bande vidéo enregistrée simultanément avec la lecture de la bande vidéo au tout début de ladite lecture, lesdits moyens de copiage comprenant :
des moyens de commutation d'enregistrement synchrone (2) destinés à générer un signai d'enregistrement synchrone ;
des moyens de commande (3) destinés à générer des premier et second signaux de commande, ledit premier signal de commande entraînant lesdits moyens de platine (4) dans un mode enregistrement afin de charger une cassette vidéo vierge et par la suite de mettre ledit magnétoscope en pause lorsqu'un signal d'entrée est entré conjointement avec ledit signal d'enregistrement synchrone, ledit second signal entraînant lesdits moyens de platine dans un mode lecture afin de charger une bande vidéo enregistrée et par la suite amener ledit magnétoscope dans un mode d'attente lorsqu'un signal d'entrée de lecture est entré conjointement avec ledit signal d'enregistrement synchrone ;
caractérisé en ce qu'il comprend en outre,
des moyens de génération d'ondes pilotes (6) destinés à générer une première onde pilote d'une fréquence donnée en fonction de ladite première commande et à délivrer ladite première onde pilote à une sortie dudit magnétoscope ;
des moyens de détection d'ondes pilotes (66) destinés à détecter une seconde onde pilote à partir d'un signal mixte reçu par l'intermédiaire d'une entrée du magnétoscope ; et
un circuit intégrateur (67) destine à intégrer ladite seconde onde pilote ;
un comparateur (68) destiné à comparer le signal intégré dudit circuit intégrateur avec un signal de référence afin de détecter ladite onde pilote afin de faire passer ledit magnétoscope dudit mode pause audit mode enregistrement ;
d'autres moyens de génération d'ondes pilotes (6) destinés à générer une seconde onde pilote d'une fréquence donnée en fonction de la réception d'une première onde pilote à une entrée du magnétoscope ;
un mélangeur (64) destiné à mélanger la seconde onde pilote et un signal audio généré pendant le mode lecture du magnétoscope et à délivrer le signal mixte jusqu'à une sortie du magnétoscope.

2. Magnétoscope selon la revendication 1, dans lequel lesdites ondes pilotes se composent d'une fréquence inaudible émise vers la borne d'entrée/sortie audio dudit magnétoscope.

3. Procédé pour copier une bande vidéo enregistrée simultanément avec la lecture de ladite bande vidéo en utilisant des premier et second magnétoscopes ayant chacun des moyens d'entrée de sélection de mode destinés à générer une pluralité de signaux d'entrée afin de réaliser diverses fonctions comprenant les fonctions d'enregistrement et de lecture, et des moyens de platine destinés à lire et enregistrer une bande vidéo en fonction dudit signal d'entrée, ledit procédé comprenant les étapes consistant à :
charger une bande vidéo enregistrée dans ledit premier magnétoscope et par la suite amener le premier magnétoscope dans un mode d'attente lorsque ledit premier magnétoscope reçoit un signal d'entrée de lecture conjointement avec un signal d'enregistrement synchrone ;
charger une bande vidéo vierge dans ledit second magnétoscope et par la suite amener le second magnétoscope dans un mode pause lorsque ledit second magnétoscope reçoit un signal d'entrée d'enregistrement conjointement avec un signal d'enregistrement synchrone ;
caractérisé en ce qu'il comprend en outre les étapes consistant à :
générer dans ledit second magnétoscope une première onde pilote d'une fréquence donnée pour indiquer que ledit second magnétoscope est prêt à réaliser la fonction d'enregistrement et à fournir ladite onde pilote audit premier magnétoscope ;
faire passer ledit premier magnétoscope en fonction de la réception de ladite première onde pilote dudit mode d'attente au mode lecture ;
générer dans ledit premier magnétoscope une seconde onde pilote et à la mélanger avec le signal audio produit pendant le mode lecture et à fournir le signal mixte audit premier magnétoscope ; et
faire passer ledit second magnétoscope en fonction de la réception de ladite seconde onde pilote du mode pause au mode enregistrement, synchronisant ainsi le début d'une fonction de lecture du premier magnétoscope avec le début de la fonction d'enregistrement dit second magnétoscope.

4. Procédé destiné à copier une bande vidéo enregistrée simultanément avec la lecture de ladite bande vidéo selon la revendication 3, dans lequel lesdites ondes pilotes ont une fréquence inaudible.

5. Procédé destiné à copier une bande vidéo enregistrée simultanément avec la lecture de ladite bande vidéo selon la revendication 3 ou 4, dans lequel lesdites ondes pilotes sont émises au moyen des bornes d'entrée/sortie audio desdits premier et second magnétoscopes.
